# FASCICULE DE BREVET EUROPEEN

(11) **EP 0 970 403 B1**
(45) Date de publication et mention de la délivrance du brevet: **08.09.2004**
(21) Numéro de dépôt: 98913881.3
(22) Date de dépôt: 11.03.1998
(51) Int. Cl.: G02C 3/00, G02C 11/00

(54) **DISPOSITIF DE RETENUE D'UNE PAIRE DE LUNETTES**
Haltevorrichtung für Brille
DEVICE FOR RETAINING A PAIR OF SPECTACLES

(30) Priorité: 11.03.1997 FR 9703366
(43) Date de publication de la demande: 12.01.2000
(73) Titulaire: DENIS, Alain, 06220 Vallauris (FR)
(72) Inventeur: DENIS, Alain, 06220 Vallauris (FR)
(74) Mandataire: Hautier, Jean-Louis
(86) Numéro de dépôt international: PCT/FR1998/000484
(87) Numéro de publication internationale: WO 1998/040780

(56) Documents cités:
- WO-A-93/18430
- WO-A-96/07121
- FR-A- 2 710 164
- GB-A- 2 212 293
- US-A- 2 808 632
- US-A- 3 397 026
- US-A- 5 092 668
- US-A- 5 475 449

## Description

### Domaine technique

La présente invention concerne les cordons et chaînettes qui permettent à un utilisateur de retenir une paire de lunettes sur lui lorsqu'il la retire momentanément de devant ses yeux et en particulier un dispositif de retenue d'une paire de lunettes fiable et de moindre coût.

### Etat de la technique

Le porteur de lunettes a de plus en plus souvent recours aux cordons, chaînettes ou bandeaux qui lui permettent de relier les branches d'une paire de lunettes entre elles et ainsi d'assurer la réalisation d'un collier autour du cou ou de la tête, ce qui évite aux lunettes de tomber lors de mouvements brusques, en particulier dans la pratique d'un sport.

Les dispositifs de retenue aident aussi les possesseurs de plusieurs paires de lunettes, en particulier ceux qui sont atteints de myopie et arrivent à l'âge de la presbytie.

Par ailleurs, ces dispositifs de retenue permettent de garder en place les lunettes sur le nez lors d'une occupation obligeant leur possesseur à baisser la tête dans des endroits où la chute des lunettes entraînerait leur perte et un risque pour le possesseur dépourvu de lunettes.

Les dispositifs de retenue comportent généralement des boucles à chacune des deux extrémités d'un cordon passant derrière la tête du possesseur de la paire de lunettes, boucles qui enserrent chacune des branches de la paire de lunettes. A sa base, les deux brins de la boucle sont enserrés dans une bague rigide en métal ou en matière plastique comme c'est le cas des dispositifs de retenue décrits dans les brevets WO 93/18430, WO 96/07121 ou US 3 397 026.

Lorsque le cordon du dispositif est en un matériau non élastique, la boucle enserrant la branche de lunettes a tendance à se relâcher et la boucle finit par glisser le long de la branche et donc se séparer de la branche. Le porteur de lunettes équipé d'un tel cordon est donc constamment en train de réajuster le cordon à ses lunettes, et cette manipulation effectuée de nombreuses fois altère la boucle d'attache qui s'use et finit par céder. On a donc songé à utiliser des cordons en matériau élastique tel que décrit dans le brevet US 3 397 026 ce qui procure une bonne attache du cordon sur la branche de lunettes. Malheureusement, les bagues utilisées actuellement pour enserrer les deux brins de la boucle sont en matériau rigide, souvent en métal. Par conséquent, lorsqu'une traction est exercée sur le cordon élastique, le diamètre des brins diminue et la bague dont l'ouverture est constante ne joue plus son rôle et peut, soit glisser et entraîner un relâchement de la boucle, soit laisser sortir le brin court de la boucle en dehors de la bague même lorsqu'un noeud a été placé à son extrémité comme c'est le cas du brevet US 3 397 026. En outre, certaines personnes sont allergiques au contact permanent de la peau avec du métal et la présence de bagues métalliques peut alors entraîner des risques pathologiques.

### Exposé de l'invention

C'est pourquoi le but de l'invention est de fournir un dispositif de retenue d'une paire de lunettes remédiant aux inconvénients cités ci-dessus, en particulier ne risquant pas de se séparer des branches de lunettes, tout en étant simple à monter et de moindre coût.

L'objet de l'invention est donc un dispositif de retenue d'une paire de lunettes défini par la revendication 1, du type comprenant un cordon élastique et deux attaches situées aux extrémités du cordon pour enserrer chacune des branches, chaque attache comprenant une boucle formée par une portion de cordon élastique et fermée à la base par un manchon également en matériau élastique enserrant les deux brins de la portion de cordon formant la boucle.

### Brève description des figures

Les buts, objets et caractéristiques de l'invention apparaîtront plus clairement à la lecture de la description qui suit en référence aux dessins dans lesquels :
la figure 1 représente un premier mode de réalisation du dispositif de retenue d'une paire de lunettes selon l'invention,
la figure 2 représente l'attache formée d'une boucle et d'un manchon dans le mode de réalisation illustré sur la figure 1,
la figure 3 représente l'attache enserrant la branche de lunettes selon le mode de réalisation illustré sur la figure 1,
la figure 4 représente l'attache enserrant la branche de lunettes selon un second mode de réalisation, et
la figure 5 représente une variante du premier mode de réalisation de l'invention illustré sur la figure 1.

### Description détaillée de l'invention

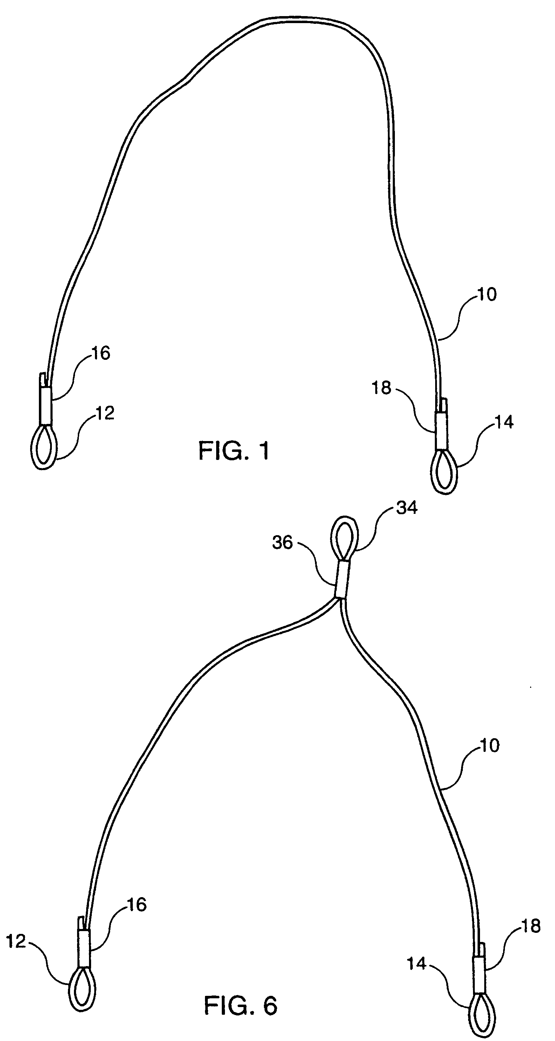

Selon un mode de réalisation préféré illustré sur la figure 1, le dispositif de retenue de lunettes selon l'invention comprend un cordon 10 en matériau élastique, notamment en caoutchouc siliconique ou en Néoprène (marque déposée) ou tout autre matériau élastomère possédant des propriétés similaires, et une boucle 12 ou 14 à chaque extrémité du cordon 10 pour enserrer les branches de lunettes. Les deux brins du cordon 10 formant la boucle 12 sont enserrés dans un manchon 16 et les deux brins du cordon 10 formant la boucle 14 sont enserrés dans un manchon 18. Les manchons 16 et 18 sont également en matériau élastique qui peut être identique au matériau composant le cordon 10 ou différent.

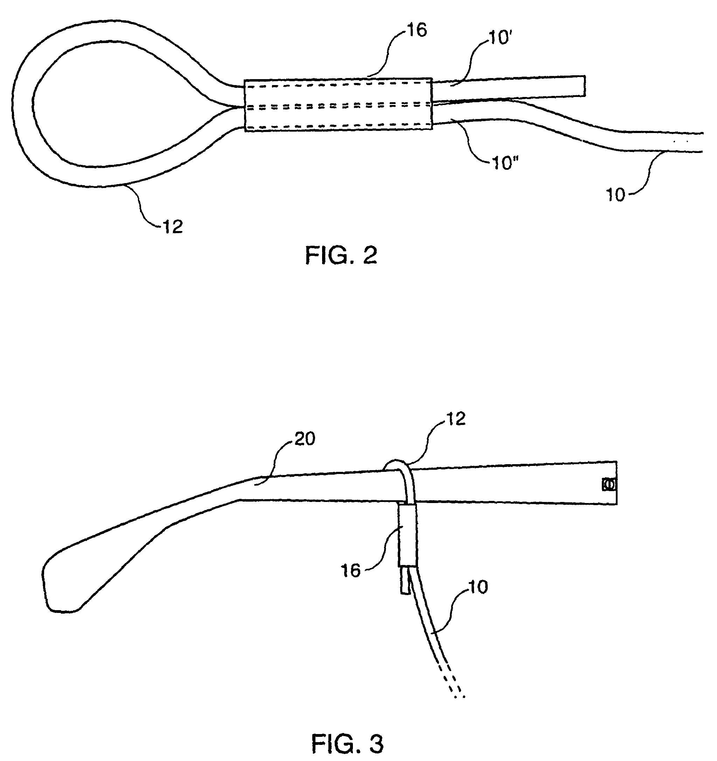

La figure 2 représente la boucle 12 (ou 14) servant d'attache et son manchon 16 (ou 18). La boucle 12 est constituée par l'extrémité du cordon 10, les deux brins 10' et 10" étant enserrés dans le manchon 16. Le diamètre du manchon doit être choisi pour être sensiblement inférieur à la somme des diamètres des deux brins de la boucle, c'est à dire sensiblement inférieur au double du diamètre du cordon 10. Par exemple, avec un cordon ayant un diamètre de 2mm, le diamètre intérieur du manchon devra être de 3mm. Par conséquent, il existe une force de frottement qui retient le manchon et l'empêche de glisser. Lorsqu'une force de traction est appliquée sur la boucle, les deux brins du cordon s'allongent tout en réduisant leur diamètre. Du fait des forces de frottement s'exerçant entre les brins de la boucle et le manchon, ce dernier continue à adhérer aux brins et s'allonge en même temps qu'eux. En conséquence, le diamètre du manchon se réduit en même temps que le manchon s'allonge et continue donc à enserrer convenablement les deux brins de la boucle sans glisser.

L'attache constituée de la boucle et de son manchon est facilement réalisée en introduisant en force les deux brins 10' et 10" de la boucle dans le manchon, par exemple à l'aide d'un passe-lacet. Une fois la boucle formée, il est aisé d'y introduire la branche de lunettes 20 comme illustré sur la figure 3 du fait de l'élasticité du matériau constituant la boucle. Une fois la boucle installée, il faut amener le manchon 16 au ras de la branche de lunettes 20 pour que la boucle 12 exerce une pression sur la branche l'empêchant de glisser le long de cette dernière, ainsi qu'un étirement permanent des deux brins de la boucle.

L'efficacité de l'attache ainsi réalisée est assurée par l'action conjuguée de l'effet de friction dû aux forces de frottement s'exerçant entre le manchon et les brins de la boucle, et l'effet d'étirement des brins de la boucle, exerçant une pression permanente sur la branche de lunettes.

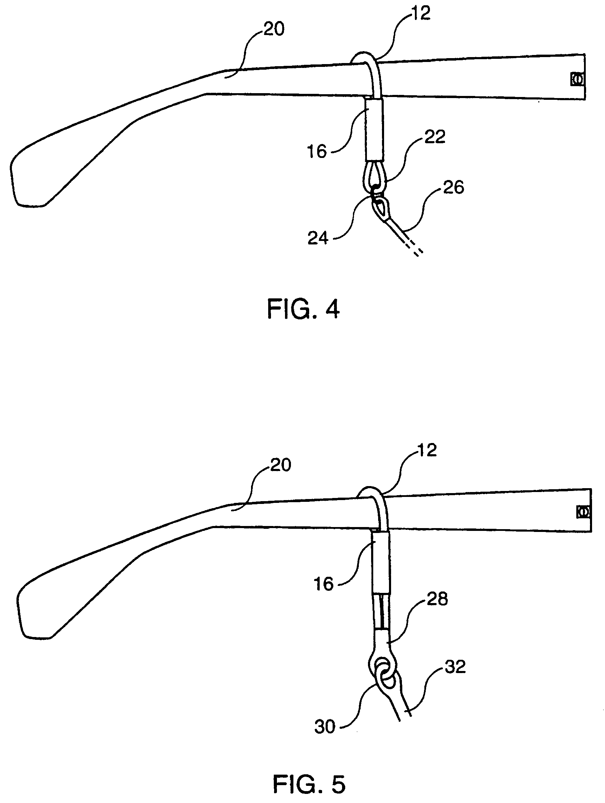

Dans un autre mode de réalisation illustré sur les figures 4 et 5, seule l'attache de la branche de lunettes comporte une portion de cordon élastique formant la boucle 12 enserrant la branche de lunettes et un manchon élastique 16 identique au cordon et au manchon du mode de réalisation de la figure 1. Il est alors possible de mettre en oeuvre deux possibilités. Dans l'exemple illustré sur la figure 4 la portion de cordon est un anneau torique qui peut être obtenu par découpage dans un tuyau de section circulaire. Les deux brins de la partie centrale sont enserrés et écrasés dans le manchon 16 et l'anneau présente donc une boucle à chaque extrémité. La boucle 12 enserre la branche de lunettes et l'autre boucle 22 est reliée par un moyen quelconque, ici un anneau 24, au cordon ou chaînette 26. Dans ce cas, il n'est pas nécessaire que le cordon ou la chaînette 26 soit en matériau élastique. On peut utiliser une chaînette en tissu ou en métal doré ou argenté pour des raisons esthétiques.

L'autre possibilité illustrée sur la figure 5 consiste à utiliser, à l'autre extrémité de la portion de cordon élastique une bague 28 fixée de façon permanente (par collage ou tout autre moyen) aux brins élastiques de la boucle. La bague 28 est terminée par un anneau passant dans l'anneau 30 se trouvant à l'extrémité du cordon ou de la chaînette 32 destinée à passer derrière la tête de l'utilisateur.

De nombreuses variantes sont possibles dans le mode de réalisation illustré sur les figures 4 et 5 sans sortir du cadre de l'invention. Ainsi, il est possible, pour des raisons esthétiques de réaliser le manchon en plusieurs parties accolées ou non, et de couleurs différentes. On peut également inclure des bagues cylindriques en matériaux divers, soit placées entre les deux parties d'un manchon élastique, soit recouvrant partiellement le manchon 16. Dans ce dernier cas, une bague faite en métal peut servir de support à une marque, décoration ou logo.

Une variante du mode de réalisation est représentée sur la figure 6. Une troisième boucle 34 est formée approximativement au milieu du cordon élastique. Grâce au manchon 36 enserrant les deux brins de la boucle 34, on peut réaliser une boucle plus ou moins grande et ainsi diminuer ou accroître la longueur du cordon 10 de façon à l'adapter à son utilisateur. De la même façon qu'il a été expliqué précédemment, la boucle 34 n'est pas modifiée ou ne se défait pas en cas de traction sur le cordon grâce aux forces de frottement entre le cordon 10 et le manchon 36.

## Revendications

1. Dispositif de retenue de paire de lunettes comprenant un cordon (10) en matériau élastique et deux attaches situées aux extrémités du cordon pour enserrer chacune des branches (20) de lunettes, chacune desdites attaches comprenant une boucle (12, 14) constituée par la portion d'extrémité du cordon (10) et fermée à sa base par un manchon (16, 18),
**Caractérisé par le fait que**
- le manchon (16, 18) est en matériau élastique et présente un diamètre inférieur au double du diamètre de la portion d'extrémité du cordon. (10) ;
- le manchon (16) enserre les deux brins (10', 10'') de la boucle (12, 14);
- ladite portion de cordon de chacune desdites attaches est en caoutchouc siliconique.

2. Dispositif de retenue selon la revendication 1 , dans lequel ledit cordon (10) est en caoutchouc siliconique.

3. Dispositif de retenue selon l'une quelconque des revendications 1 à 2 dans lequel ledit cordon comprend une boucle (30) fermée par un manchon (32) également en matériau élastique de manière à pouvoir ajuster la longueur dudit cordon.

## Patentansprüche

1. Zurückhaltevorrichtung für Brillen mit einer Schnur (10) aus einem elastischen Material und zwei Befestigungselementen an den Enden der Schnur, mit denen jeder Brillenbügel (20) umschlossen wird, wobei die genannten Befestigungselemente eine Schlaufe (12, 14) besitzen, die aus dem Endabschnitt der Schnur (10) gebildet und an ihrer Basis durch eine Manschette (16, 18) geschlossen wird,
**gekennzeichnet dadurch, dass**
- die Manschette (16, 18) aus einem elastischen Material ist und ihr Durchmesser kleiner als der Durchmesser des Endabschnitts der Schnur (10) ist;
- die Manschette (16) die beiden Brillenbügel (10', 10") der Schlaufe (12, 14) mit Druck umschließt;
- der genannte Endabschnitt der Schnur an jedem der genannten Befestigungselemente aus Silikonkautschuk ist.

2. Zurückhaltevorrichtung gemäß Anspruch 1, bei der die genannte Schnur (10) aus Silikonkautschuk ist.

3. Zurückhaltevorrichtung gemäß einem der Ansprüche 1 bis 2, bei der die genannte Schnur eine Schlaufe (30) besitzt, die von einer Manschette (32) geschlossen wird, die ebenfalls aus einem elastischen Material ist, um die Länge der genannten Schnur einstellen zu können.

## Claims

1. Retaining device for a pair of glasses comprising:
a cord (10) of elastic material and two fasteners located at the ends of the cord enclosing each branch (20) of the spectacles, each one of the aforesaid fasteners comprising a loop (12, 14) consisting of the end part of cord (10), closed at its base by a sleeve (16, 18),
**characterized in that**
- sleeve (16, 18) is in elastic material with a diameter less than double the diameter of the end part of the cord (10);
- sleeve (16) encloses two strands (10', 10") of loop (12, 14))
- the aforementioned part of the cord of each one of the aforesaid fasteners is made out of silicon rubber.

2. Retaining device according to claim 1, in which the aforementioned cord (10) is out of silicon rubber.

3. Retaining device according to any of claims 1 to 2 in which the aforementioned cord includes a loop (30) enclosed by a sleeve (32) also in an elastic material which can be used to adjust the length of the aforesaid cord.
